# EUROPÄISCHE PATENTSCHRIFT

(11) **EP 2 920 091 B1**
(45) Veröffentlichungstag und Bekanntmachung des Hinweises auf die Patenterteilung: **13.12.2017**
(21) Anmeldenummer: 13783023.8
(22) Anmeldetag: 21.10.2013
(51) Int. Cl.: B65G 15/42

(54) **WELLKANTE FÜR EINEN FÖRDERGURT MIT DEN ABWURFELEMENTEN GEGENÜBERLIEGENDEN AUSSPARUNGEN**
CORRUGATED SIDEWALL FOR A CONVEYOR BELT WITH CUT-OUTS OPPOSITE THE DISCHARGE ELEMENTS
BORD ONDULÉ POUR UNE BANDE TRANSPORTEUSE À ÉVIDEMENTS OPPOSÉS AUX ÉLÉMENTS DE DÉCHARGEMENT

(30) Priorität: 16.11.2012 DE 102012111036
(43) Veröffentlichungstag der Anmeldung: 23.09.2015
(73) Patentinhaber: ContiTech Transportbandsysteme GmbH, 30165 Hannover (DE)
(72) Erfinder: LORENZ, Bernd, 48691 Vreden (DE)
(74) Vertreter: Finger, Karsten
(86) Internationale Anmeldenummer: PCT/EP2013/071923
(87) Internationale Veröffentlichungsnummer: WO 2014/075870

(56) Entgegenhaltungen:
- CH-A5- 603 451
- DE-A1- 3 219 170
- DE-B- 1 253 634

## Beschreibung

Die Erfindung betrifft eine Wellkante für einen Fördergurt gemäß dem Oberbegriff des Anspruch 1 sowie einen Fördergurt mit einer derartigen Wellkante.

Es ist seit langem bekannt, lose Güter wie z.B. Abraum im Bergbau, Getreide und dergleichen mittels endlos geschlossener Fördergurte zu transportieren. Damit dieses Fördergut beim Transport das Fördergurt nicht verlassen und viel Fördergut pro Fördergurtbreite transportiert werden kann, können zum einen die Seiten der Fördergurtes nach oben angehoben werden, so dass sich ein muldenförmiger Fördergurt ausbildet, oder es können seitliche Begrenzungen am Fördergurt vorgesehen werden. Diese Kanten werden teilweise auch in Längsrichtung gewellt senkrecht zur Fördergurtoberfläche auf dieser angeordnet ausgeführt, vgl. z.B. DE 42 23 634 C2 und DE 32 47 696 A1.

Dabei sind diese Wellkanten so auszubilden, dass sie die Bewegungen des Fördergurtes nicht behindern, d.h. sich auch Neigungen des Fördergurtes um die Längs- und Querachse anpassen können, und hierbei auch nicht beschädigt werden. Insbesondere an Umlenkstationen werden die Wellkanten gedehnt bzw. gestaucht, was zu wiederkehrenden dynamischen Belastung der Wellkanten führt. Auch erhöhen die Wellkanten das Gewicht des Fördergurtes als Ganzes sehr wesentlich, sind sie doch so stabil auszubilden, dass sie auch bei dynamischen Bewegungen des Fördergurtes das Fördergut seitlich sicher halten können.

Aus der DE 42 20 872 A1 ist ein Förderband mit gewellten Seitenwänden bekannt, bei denen die zur Förderseite der Seitenwände ausgerichteten Wellentäler jeweils ein in etwa vom innenliegenden Wellenscheitel schräg nach oben in den gewellten Kopfbereich der Seitenwand sich schräg-verjüngend auslaufendes und in sich dehnfähiges Abwurfelement aufweisen, welches an sich der Selbstreinigungsfunktion der Wellkanten dient und aufgrund seiner Ausgestaltung eine von der Drehkraft der Trommel beim Gurtumlauf ausgehende Spreizkraft besser überträgt als bislang üblich. Derartige Abwurfelemente werden auch in der DE 28 41 795 an den Wellkanten verwendet.

Das Dokument CH 603451 A5 offenbart eine Wellkante für einen Fördergurt nach dem Oberbegriff des Anspruchs 1.

Nachteilig ist hierbei, dass durch die Ausbildung dieser Abwurfelemente das Gewicht des Fördergurtes weiter erhöht wird. Insgesamt erhöhen die Wellkanten das Gewicht des Fördergurtes signifikant, was z.B. zu höheren erforderlichen Antriebskräften der Fördergurtanlagen führt.

Die Aufgabe der vorliegenden Erfindung ist es daher, eine Verbesserung der dynamischen Eigenschaften eines mit Wellkanten versehenen Fördergurtes bei gleichzeitig möglichst geringem Gewicht der Seitenwände zu erreichen.

Die Aufgabe wird erfindungsgemäß durch eine Wellkante mit den Merkmalen gemäß Anspruch 1 gelöst. Vorteilhafte Weiterbildungen sind in den Unteransprüchen beschrieben. Somit betrifft die vorliegende Erfindung eine Wellkante für einen Fördergurt mit einem in Förderrichtung gewellten Profil von sich abwechselnden Wellentälern und Wellenscheiteln, wobei zumindest ein Teil der Wellentäler jeweils im Bereich der Unterseite der Wellkante auf der Fördergutseite sich schräg nach oben in das jeweilige Wellental verjüngende Abwurfelemente aufweist. Die Wellkante zeichnet sich dadurch aus, dass zumindest bei einem Teil der Abwurfelemente eine diesen auf der Außenseite gegenüberliegende Aussparung vorgesehen ist, wobei ferner bei zumindest einem Teil der Wellenscheiteln die diesen auf der Außenseite gegenüberliegende Aussparung vorgesehen ist. Der vorliegenden Erfindung liegt die Erkenntnis zugrunde, dass die bei Fördergurten mit Wellkanten üblicherweise vorgesehenen Abwurfelemente die Stabilität der Seitenwände, insbesondere bei dynamischen Belastungen, derart verbessern, dass den Abwurfelementen diese Aufgabe auch vollständig alleine überlassen werden kann, d.h. die Wellkante im unteren Bereich auch ohne eine senkrechte Abstützung des oberen Wellkantenbereichs auf dem Fördergurt vorgesehen werden kann. Hierdurch kann bei gleichbleibenden oder sogar verbesserten dynamischen Eigenschaften der Wellkanten eine deutliche Gewichtsreduzierung des Fördergurtes erreicht werden. Ferner können diese Aussparungen in der Herstellung durch eine einfache Anpassung der Wellkantenformen vorgesehen werden, so dass der Herstellprozess der Wellkanten ansonsten unverändert bleiben kann, was die Kosten zur Herstellung erfindungsgemäßer Wellkanten gering hält.

Die Aussparungen und die in Querrichtung des Fördergurtes ihnen gegenüberliegenden Abwurfelemente können in jedem Wellental der Fördergutseite (Innenseite) der Wellkante vorgesehen sein oder auch nur bei einem Teil der Wellentäler. Auch können bei einer erfindungsgemäßen Wellkante Abwurfelemente vorgesehen sein, die keine entsprechenden Aussparungen aufweisen. Hierdurch steht erfindungsgemäß ein großer Spielraum bei der konstruktiven Ausgestaltung und Beeinflussung der dynamischen Eigenschaften von Wellkantenprofilen.

Gemäß einem weiteren Aspekt der vorliegenden Erfindung weist die Oberkante der Wellkante ein weiteres gewelltes Profil auf, welches senkrecht zur Förderrichtung verläuft. Hierdurch wird eine weitere Gewichtsreduzierung bei ebenfalls gleichbleibenden oder sogar verbesserten dynamischen Eigenschaften der Wellkanten erreicht.

Die vorliegende Erfindung betrifft auch einen Fördergurt mit elastomerem Werkstoff, der wenigstens eine Wellkante wie zuvor beschrieben aufweist. Vorzugsweise weist der Fördergurt in Förderrichtung verlaufende Festigkeitsträger auf.

Ausführungsbeispiele und weitere Vorteile der Erfindung werden nachstehend im Zusammenhang mit den folgenden Figuren erläutert. Darin zeigt:
- Fig. 1a: eine perspektivische schematische Darstellung einer herkömmlichen Wellkante;
- Fig. 1b: eine seitliche schematische Darstellung der Wellkante der Fig. 1a;
- Fig. 2: eine perspektivische schematische Darstellung einer erfindungsgemäßen Wellkante in einer ersten Ausführungsform;
- Fig. 3a: eine perspektivische schematische Darstellung einer erfindungsgemäßen Wellkante in einer zweiten Ausführungsform; und
- Fig. 3b: eine seitliche schematische Darstellung der Wellkante der Fig. 3a.

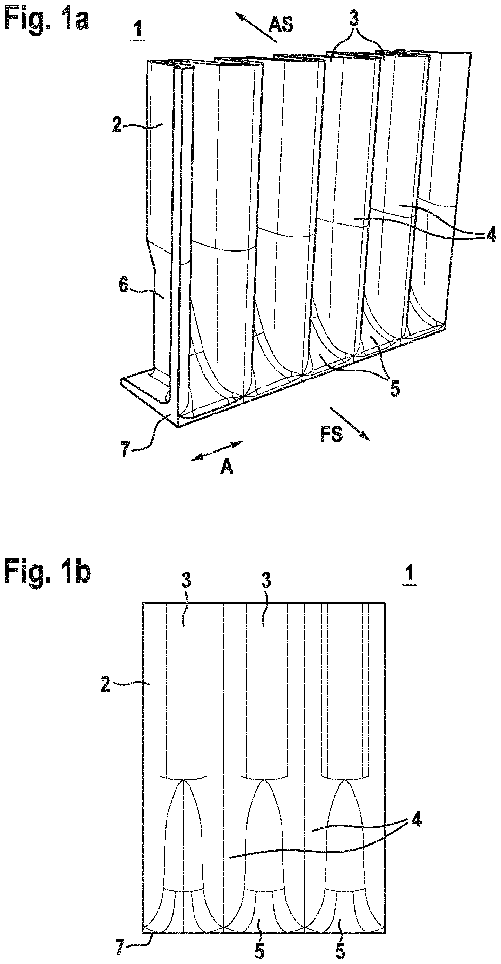

Fig. 1a zeigt eine perspektivische schematische Darstellung einer herkömmlichen Wellkante 2; Fig. 1b eine seitliche schematische Darstellung der Wellkante 2 der Fig. 1a. Die Wellkante 2 kann bei einem Fördergurt 1 (nicht dargestellt) zur seitlichen Begrenzung des Aufnahmebereichs des Fördergurtes 1 und zur seitlichen Abstützung des Fördergutes verwendet werden. Die Wellkante 2 weist ein gewelltes Profil in Längsrichtung A (Förderrichtung A) auf, bei dem sich Wellentäler 3 und Wellenscheitel 4 abwechseln. Von der Innenseite FS (Fördergutseite FS) weist die Wellkante 2 sich schräg nach oben in das jeweilige Wellental 3 verjüngende Abwurfelemente 5 auf, die das Abwerfen des transportierten Fördergutes an der Abladestelle begünstigen sollen.

Herkömmliche derartige Wellkanten 2 weisen auf ihrer Außenseite AS Stützelemente 6 auf, die den Abwurfelementen 5 in Querrichtung des Fördergurtes 1 direkt gegenüberliegen und den oberen Bereich der Wellkante 2 auf der Unterseite 7 der Wellkante 2, mit der diese auf einem Fördergurt 1 aufliegt bzw. mit diesem verbunden ist, senkrecht zur Oberfläche des Fördergurtes 1 abstützen. Diese Stützelemente 6 verlaufen ebenfalls als Wellenprofil, wurde doch bei der Entwicklung der Wellkanten 2 durchgängig gewellte Profile senkrecht auf die Oberfläche des Fördergurtes 1 aufgesetzt. Hierauf aufbauend wurden später die Abwurfelemente 5 ergänzt, ohne die durchgängig gewellten Profile der Wellkante 2 zu verändern.

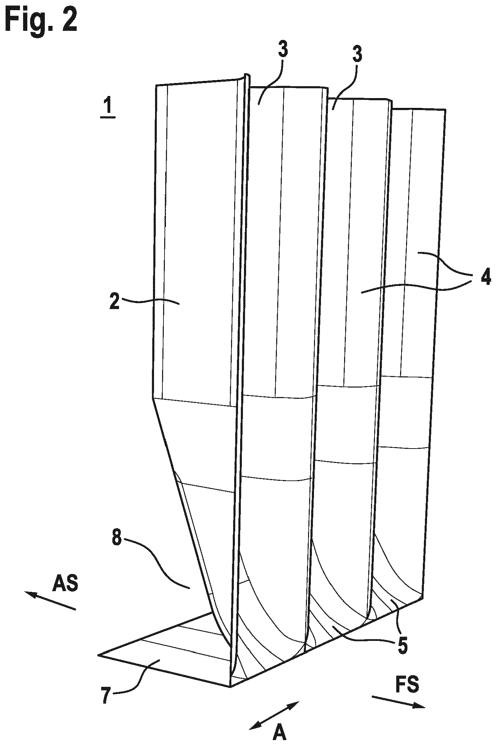

Fig. 2 zeigt eine perspektivische schematische Darstellung einer erfindungsgemäßen Wellkante 2 in einer ersten Ausführungsform. Bei diesem Profil wurde die Notwendigkeit eines von der Unterseite 7 an durchgehenden Wellprofils hinterfragt unter dem Gesichtspunkt, inwiefern die Stabilität der Wellkante 2 nicht durch die Abwurfelemente 5 übernommen wird. Da diese derart ausgebildet werden können, dass sie die dynamischen Belastungen der Wellkanten 2 großteils bis vollständig übernehmen, weist die erfindungsgemäße Wellkante 2 der Fig. 2 anstelle der Stützelemente 6 an diesen Stellen Aussparungen 8 auf. Auf diese Weise werden die Kräfte, die auf die Wellkanten 2 wirken, über die Abwurfelemente 5 auf die Unterseite 7 der Wellkante 2 übertragen, was gegenüber den bisherigen Ausgestaltungen von Wellkanten 2 (vgl. z.B. Fig. 1a, 1b) keine wesentlichen Unterschiede im dynamischen Verhalten mit sich bringt, d.h. die Verformung der Wellkante 2 ist bei den Ausführungen gemäß der Fig. 1a, 1b gegenüber der Ausgestaltung der Fig. 2 vergleichbar. Hieraus kann geschlossen werden, dass die Stützelemente 6 gar keine bzw. keine wesentliche Wirkung auf die Wellkanten 2 bei dynamischen Belastungen haben. Gleichzeitig kann jedoch das Gewicht der Wellkanten 2 durch das Weglassen der Stützelemente 6 um z.B. 8% bis 10% reduziert werden. Diese Gewichtsreduzierung vermindert den Energiebedarf, der zum Antrieb eines Fördergurtes erforderlich ist, und auch die gesamten konstruktiven Anforderungen an derartige Anlagen, die selbst leichter ausfallen können, wenn auch die bewegten Lasten geringer sind.

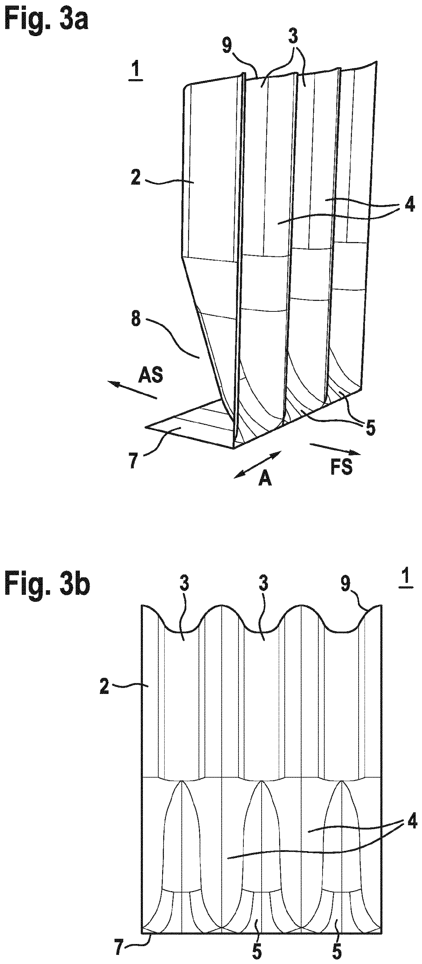

Fig. 3a zeigt eine perspektivische schematische Darstellung einer erfindungsgemäßen Wellkante 2 in einer zweiten Ausführungsform; Fig. 3b eine seitliche schematische Darstellung der Wellkante 2 der Fig. 3a. In dieser Ausführungsform ist zusätzlich die Oberkante 9 der Wellkante 2 in der Richtung senkrecht zur Förderrichtung A gewellt ausgeführt. Dies führt zu einer weiteren signifikanten Gewichtsreduzierung um z.B. 4% bis 5% mit den zuvor beschriebenen Vorteilen, ohne dass hierdurch die dynamischen Eigenschaften der Wellkante 2 beeinflusst werden.

### Bezugszeichenliste

### (Teil der Beschreibung)

- A: Förderrichtung, Laufrichtung des Fördergurtes 1
- AS: Außenseite des Fördergurtes 1
- FS: Fördergutseite (Innenseite) des Fördergurtes 1

- 1: Fördergurt bzw. Fördergurtseitenwand
- 2: Wellkante
- 3: Wellental der Wellkante 2
- 4: Wellenscheitel der Wellkante 2
- 5: Abwurfelement der Wellkante 2
- 6: Stützelement der Wellkante 2
- 7: Unterseite der Wellkante 2
- 8: Aussparung der Wellkante 2
- 9: Wellenoberkante der Wellkante 2

## Patentansprüche

1. Wellkante (2) für einen Fördergurt (1), mit
einem in Förderrichtung (A) gewellten Profil von sich abwechselnden Wellentälern (3) und Wellenscheiteln (4),
wobei zumindest ein Teil der Wellentäler (3) jeweils im Bereich der Unterseite (7) der Wellkante (2) auf der Fördergutseite (FS) sich schräg nach oben in das jeweilige Wellental (3) verjüngende Abwurfelemente (5) aufweist,
wobei zumindest bei einem Teil der Abwurfelemente (5) eine diesen auf der Außenseite (AS) gegenüberliegende Aussparung (8) vorgesehen ist,
**dadurch gekennzeichnet,**
**dass** ferner bei zumindest einem Teil der Wellenscheiteln (4) die diesen auf der Außenseite (AS) gegenüberliegende Aussparung (8) vorgesehen ist.

2. Wellkante (2) nach Anspruch 1,
wobei die Oberkante (9) der Wellkante (2) ein weiteres gewelltes Profil aufweist, welches senkrecht zur Förderrichtung (A) verläuft.

3. Fördergurt (1) mit elastomerem Werkstoff, der wenigstens eine Wellkante (2) nach einem der vorherigen Ansprüche aufweist.

4. Fördergurt (1) nach Anspruch 3, der in Förderrichtung (A) verlaufende Festigkeitsträger aufweist.

## Claims

1. Corrugated edge (2) for a conveyor belt (1), having a profile which is corrugated in a conveying direction (A) and comprises alternating troughs (3) and peaks (4),
wherein in each case in the region of the underside (7) of the corrugated edge (2), on the conveying-material side (FS), at least some of the troughs (3) have discharging elements (5) which taper obliquely upwards into the respective trough (3),
wherein at least some of the discharging elements (5) have a clearance (8) located opposite them on the outer side (AS),
**characterized**
**in that** it is also the case that at least some of the peaks (4) have the clearance (8) located opposite them on the outer side (AS).

2. Corrugated edge (2) according to Claim 1,
wherein the upper edge (9) of the corrugated edge (2) has a further corrugated profile, which runs perpendicularly to the conveying direction (A).

3. Conveyor belt (1) made of elastomeric material and having at least one corrugated edge (2) according to either of the preceding claims.

4. Conveyor belt (1) according to Claim 3, having reinforcing members running in the conveying direction (A).

## Revendications

1. Bord ondulé (2) pour une bande transporteuse (1), comprenant
un profil ondulé dans la direction de transport (A) constitué d'une alternance de creux d'ondulations (3) et de sommets d'ondulations (4), au moins une partie des creux d'ondulations (3) présentant à chaque fois dans la région du côté inférieur (7) du bord ondulé (2) sur le côté de la bande transporteuse (FS) des éléments d'éjection (5) se rétrécissant obliquement vers le haut dans le creux d'ondulation respectif (3),
au moins un évidement (8) étant prévu au niveau d'une partie des éléments d'éjection (5) de manière opposée à ceux-ci sur le côté extérieur (AS),
**caractérisé en outre en ce que**
l'évidement (8) est prévu au niveau d'au moins une partie des sommets d'ondulations (4) de manière opposée à ceux-ci sur le côté extérieur (AS).

2. Bord ondulé (2) selon la revendication 1,
dans lequel le bord supérieur (9) du bord ondulé (2) présente un profil ondulé supplémentaire qui s'étend perpendiculairement à la direction de transport (A).

3. Bande transporteuse (1) comprenant un matériau élastomère qui présente au moins un bord ondulé (2) selon l'une quelconque des revendications précédentes.

4. Bande transporteuse (1) selon la revendication 3, qui présente des renforcements s'étendant dans la direction de transport (A).
